Europäisches Patentamt

European Patent Office

Office européen des brevets

(19)

(11) Veröffentlichungsnummer: **0 331 912 B1**

## (12) EUROPÄISCHE PATENTSCHRIFT

(45) Veröffentlichungstag der Patentschrift: **23.09.92**

(51) Int. Cl.5: **B01L 3/02**

(21) Anmeldenummer: **89102094.3**

(22) Anmeldetag: **08.02.89**

(54) Befüllbares Probenaufnahmegefäss zur Handhabung einer flüssigen Probe.

(30) Priorität: **09.03.88 DE 3807704**

(43) Veröffentlichungstag der Anmeldung:
**13.09.89 Patentblatt 89/37**

(45) Bekanntmachung des Hinweises auf die
Patenterteilung:
**23.09.92 Patentblatt 92/39**

(84) Benannte Vertragsstaaten:
**AT BE CH ES FR GB IT LI NL SE**

(56) Entgegenhaltungen:
EP-A- 0 273 057
DE-A- 859 684
DE-A- 3 029 718
US-A- 4 197 746

SOVIET INVENTIONS ILLUSTRATED, Woche
84/12, Nr. 84-073032/12, 2. Mai 1984, Derwent
Publications, London, GB

PATENT ABSTRACTS OF JAPAN, Band 7, Nr.
109 (P-196)[1254], 12. Mai 1983

(73) Patentinhaber: **EPPENDORF-NETHELER-HINZ
GMBH
Barkhausenweg 1
W-2000 Hamburg 63(DE)**

(72) Erfinder: **Gerken, Hero, Dr. Ing.
Susebekweg 10
W-2000 Hamburg 63(DE)**

(74) Vertreter: **Dipl.-Ing. H. Hauck Dipl.-Ing. E.
Graalfs Dipl.-Ing. W. Wehnert Dr.-Ing. W. Döring
Neuer Wall 41
W-2000 Hamburg 36(DE)**

**Beschreibung**

Die Erfindung betrifft ein befüllbares Probenaufnahmegefäß zur Handhabung einer flüssigen Probe nach dem Oberbegriff des Anspruchs 1.

In diesem Zusammenhang bezweckt die Erfindung die Handhabung einer flüssigen Probe in einem Probenaufnahmegefäß, das in wenigstens teilweise konischer Gestalt eine eine Öffnung aufweisende Spitze hat, die eine Einsaug- oder auch Abgabeöffnung ist.

Ein befüllbares Probenaufnahmegefäß gemäß DE-OS 30 29 718 ist zum Transport zu analysierender Flüssigkeiten von unten verschließbar, nachdem die Flüssigkeit einmal eingesaugt ist. Zum Verschluß ist eine Einhandbetätigung beabsichtigt. Deshalb hat die bekannte Ausführung auch das nach unten herausgeführte stangenförmige Betätigungselement.

In der Ausführung mit einem beweglichen Ventilkörper ist innerhalb des Gefäßes in der Nähe der Einsaugöffnung ein Ventilsitz angeordnet, an welchen der Ventilkörper heranbewegbar ist, und zwar dadurch, daß das stangenförmige Betätigungselement an eine Unterlage angedrückt wird. Dadurch wird der Ventilkörper für die weitere Handhabung unlösbar mit dem Ventilsitz verbunden bzw. findet eine irreversible Verrastung statt, damit das Probengefäß nach der Füllung mit Abschluß nach unten an andere Orte übertragen werden kann, ohne daß auch bei Abfall der Saugwirkung Flüssigkeit austritt.

Dabei ist es nach dem einmaligen Abschluß der unteren Einsaugöffnung dann, wenn die Flüssigkeit wieder abgegeben werden soll, allerdings notwendig, das Probengefäß von einer Pipette oder entsprechenden Vorrichtung je nach Ausführung zu lösen und die Flüssigkeit nach oben herauszunehmen oder zu gießen. Dieses ist aufwendig und umständlich. Die einwandfreie Handhabung erfordert besondere Geschicklichkeit und Zeit. Vor allem beruht diese bekannte Ausführung darauf, eine in das Probengefäß aufgenommene Flüssigkeit sicher im Probengefäß zu halten.

Der DE-C-859 684 ist schon ein Meß- oder Prüfzylinder der eingangs genannten Art entnehmbar, dessen Schwerkraftventil einen kugelförmigen Ventilkörper mit einem durch die Einsaugöffnung geführten Ventilschaft aufweist. Der Ventilkörper kann sich in begrenztem Maße an verschiedene Gefäße mit verschiedenen Konizitäten nahe der Einsaugöffnung anpassen. Die Anpassungsfähigkeit ist allerdings besonders durch das Verhältnis der Durchmesser von Ventilkörper und Ventilschaft begrenzt. Außerdem muß das Schwerkraftventil stets mit dem Ventilschaft durch die Einsaugöffnung geführt werden, wodurch sich Probleme bei der Handhabung, insbesondere beim Zusammenbau ergeben können.

Davon ausgehend liegt der Erfindung die Aufgabe zugrunde, ein besser handhabbares Probenaufnahmegefäß zu schaffen, dessen Schwerkraftventil mit Gefäßen in einem größeren Bereich verschiedener Konizitäten zusammenarbeiten kann.

Diese Aufgabe wird erfindungsgemäß durch den Anspruch 1 gelöst. Bevorzugte Ausgestaltungen sind in den Unteransprüchen angegeben.

Der Ausdruck Schwerkraftventil bringt bei entsprechender Ausrichtung des Probenaufnahmegefäßes die Wirkung eines Rückschlagventils zum Ausdruck. Die Anordnung eines Schwerkraftventils an einem Probenaufnahmegefäß obiger Art hat den Vorteil, daß insbesondere auch ohne zusätzliche Ausgestaltung und bei der Wiederverwendbarkeit des Schwerkraftventils, das durch die obere Öffnung des Probenaufnahmegefäßes einsetzbar und herausnehmbar ist, ein Probenaufnahmegefäß, insbesondere in Form eines Gefäßes geschaffen wird, welches nicht nur einen Transport der Probenflüssigkeit zu verschiedenen Stellen ermöglicht, sondern vor allem auch bei Einsatz am Ort die Tropfenbildung ausschließt, auch wenn eine Probenflüssigkeit mit hohem Dampfdruck verarbeitet wird. Dieser Dampfdruck erzeugt einen Innendruck und der Hinweis auf diesen bezieht ein, daß die Erfindung insbesondere auf die Behandlung größerer Volumina in obigem Sinne auch im Zusammenhang mit Luft als Zwischenmedium gerichtet ist. Organische Substanzen und Flüssigkeiten mit höherem Dampfdruckwert entwickeln bei größeren Volumina einen Innendruck, der bei bekannten Verfahren und Probenaufnahmegefäßen zur Voluminaverfälschung durch Flüssigkeitsabtropfung führt. Hierbei wird insbesondere nicht nur die medizinische Anwendung, sondern auch die analytische Chemie in technischer Anwendung einbezogen. Dieses sind bevorzugte Anwendungen.

Flüssigkeiten höheren Dampfdruckes, insbesondere auch organische Substanzen oder Flüssigkeiten können dabei mit besonderem Vorteil verarbeitet werden, wobei auch sämtliche aggressiven Substanzen, wie z.B. Säuren einbezogen werden. Eine besondere Anwendung liegt vorzugsweise in der Verarbeitung größerer Volumina mit hohem Dampfdruck, wobei größere Volumina über 1 ml liegen. Das Probenaufnahmegefäß ist in erster Linie, und darin liegen besondere Vorteile, für in der Analysentechnik große Volumina in der Größenordnung von beispielsweise 1 bis 50 ml, insbesondere 1 bis 10 ml, ausgeführt.

Es versteht sich, daß zur Funktion auch ein sich nach Aufnahme der Probenflüssigkeit entwickelnder Dampfdruck funktionsbestimmend sein kann, zumal der Aufnahmeraum in einem auf eine Pipette aufgesetzten Probengefäß durch die Bauteile der Pipette nach oben beschränkt ist.

Der Hinweis auf einen Innendruck bezieht dabei ein, daß die Erfindung insbesondere auf die Behandlung größerer Volumina in obigem Sinne auch im Zusammenhang mit Luft als Zwischenmedium gerichtet ist.

Es ist bereits oben dargelegt, daß gerade organische Substanzen und Flüssigkeiten mit höheren Dampfdruckwerten über eine Volumengrenze einen Innendruck entwickeln, der bei bekannten Ausführungen zu Abtropferscheinungen führt, was einerseits durch die Voluminaverfälschung an sich nachteilig sein, andererseits aber je nach Art der Flüssigkeit zu Schäden führen kann. Zweckmäßig wird bei der Handhabung insbesondere organischer Flüssigkeiten mit höherem Dampfdruck als Wasser und Tropfenbildung der Verschluß aufgrund der durch die Lage bestimmten Schwerkraft und eines sich im Inneren entwickelnden Dampfdruck hergestellt. Eine Öffnung erfolgt dann durch äußere Einwirkung gegen den Innendruck innerhalb eines Gefäßes. Dieses Verfahren ist daher mit einfachen Mitteln durchführbar.

Für den Ventilkörper des Schwerkraftventils gilt insbesondere eine Ausführung aus einem inerten Material. Einbezogen wird hierbei eine Ausführung aus Metall, Edelstahl, Glas, Kunststoff oder Keramik. Auch das wird als besonders vorteilhaftes Merkmal einbezogen, wobei der Ventilkörper mit einem spezifischen Gewicht ausgeführt ist, das schwerer als das des Wassers oder je nach Anwendung halogenierten Kohlenwasserstoffes ist, so daß der Ventilkörper bei den im allgemeinen anzuwendenden Probenflüssigkeiten nicht aufschwimmt.

Hierbei bezieht die Erfindung in einer besonderen Ausgestaltung des Probenaufnahmegefäßes ein, daß es im Anschluß an die Öffnung größeren Querschnitts einen zylindrischen Wandabschnitt und einen durch die größere Öffnung eingeführten Kolben mit herausgeführter Kolbenstange aufweist, wobei dann auch ein Flansch an dem Ende des Probenaufnahmegefäßes mit der Öffnung größeren Querschnitts angeordnet sein kann. Das Gefäß weist einen sich verjüngenden konischen Abschluß mit der Einsaugöffnung auf, in der das Ventil enthalten ist.

Der in Anlage kommende Teil des Ventilkörpers kann elastisch verformbar ausgeführt sein. Hierdurch lassen sich die Ventilsitze jeweils günstig an besondere Dichtungs-, aber auch Öffnungsbedingungen anpassen.

Wenn die Gesamtlänge des Ventilkörpers größer als der Durchmesser der größeren Öffnung ist, führt dies zu einer erhöhten Betriebssicherheit.

Der Ventilkörper muß bei seiner Einführung in eine definierte Lage gebracht werden und behält dann seine richtige Stellung.

Die Erfindung wird im folgenden anhand eines Ausführungsbeispiels beschrieben, das in den Zeichnungen dargestellt ist. In den Zeichnungen zeigen:

Fig. 1 eine schematische Seitenansicht einer Pipette mit einem aufgesteckten Probengefäß;

Fig. 2 eine Seitenansicht eines Ventilkörpers für das Probengefäß.

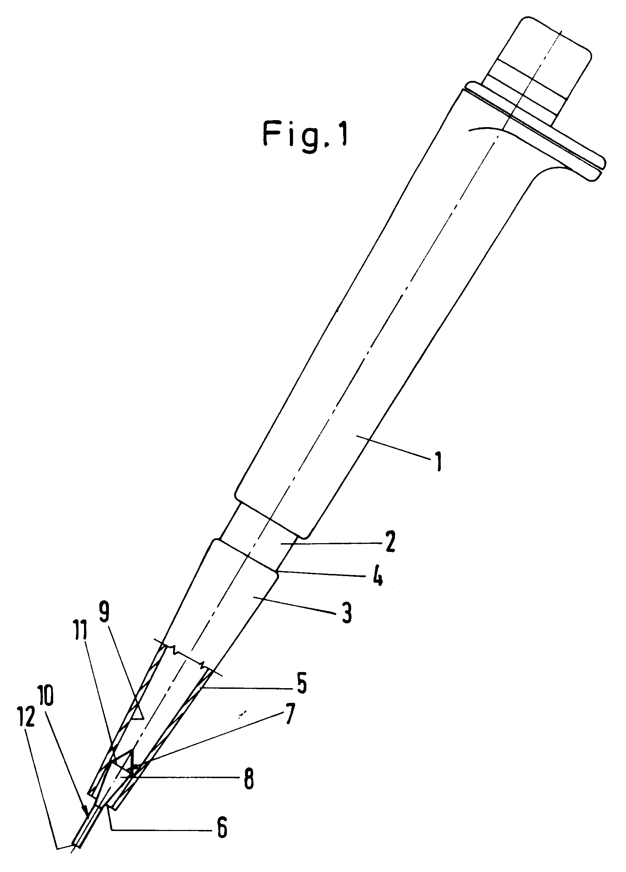

In Fig. 1 ist die Pipette 1 in üblicher Weise, z.B. gemäß DE-PS 25 49 477 ausgeführt. Diese Pipette hat unten einen Aufsteckkonus 2. Auf diesen Aufsteckkonus ist mit seiner oberen Öffnung 4 ein Probengefäß 3 aufgesteckt. Dieses Probengefäß ist wenigstens teilweise oben und unten konisch ausgeführt und hat einen sich nach unten verjüngenden Wandteil 5, der in einer Einsaugöffnung 6 mündet. Solche Ausführungen sind bekannt.

In der Einsaugöffnung ist ein Schwerkraftventil 7 angeordnet, und zwar mit einem konischen Ventilkörper 8, der seinen Sitz an der konischen Wand 9 des Probengefäßes oberhalb der Einsaugöffnung 6 findet und ein durch die Einsaugöffnung 6 gegenüber dieser mit Untermaß herausgeführtes Betätigungselement 10 aufweist.

Bei Druck auf die Oberseite 11 des Ventilkörpers wird dieser an seinen Sitz gepreßt. Das stangenförmige Betätigungselement ragt nach unten heraus. Das Ventil ist jederzeit zu öffnen, wenn das Ende 12 des herausgeführten Betätigungselementes 10 an eine Widerlagerfläche gedrückt wird. Die Oberseite 11 ist aber vorteilhaft mit einem nach oben gerichteten Kegel ausgeführt.

Der Ventilkörper 8 ist von oben durch die Öffnung 4 einsetz- bzw. einwerfbar. Der Ventilkörper 8 ist auch nach einem Untersuchungsvorgang aus dem Probengefäß 3 wieder herausnehmbar, und er kann nach Reinigung oder Desinfektion weiterverwendet werden.

Im Unterschied zum Gefäß nach Hauptanspruch hat der Ventilkörper 8 zwischen seinen konischen oder kegelförmigen Abschnitten keinen mittleren zylindrischen Abschnitt, der insbesondere zentrierungs- und fertigungstechnische Vorzüge hat.

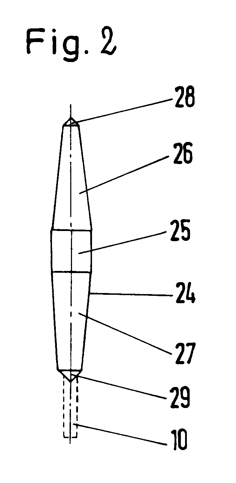

Die Fig. 2 zeigt eine solche Gestaltung eines Ventilkörpers 24 aus einem der genannten Materialien. Dieser Ventilkörper 24 hat einen mittleren zylindrischen Abschnitt 25 und zwei sich axial von dieserm erstreckende konische Abschnitte 26, 27 mit verschiedenen Konuswinkeln. Dieser Ventilkörper kann wegen seiner symmetrischen oder quasi symmetrischen Gestaltung oder Formung nicht falsch eingesetzt werden, so daß nicht nur die Vereinfachung in der Anwendung erreicht, sondern zugleich auch die Betriebssicherheit erhöht wird.

Die konusförmigen Abschnitte enden in kregelförmigen Spitzen 28, 29, die im obigen Sinne als Ablaufhilfe für Probenflüssigkeit dienen.

Entweder dient bei Verwendung eines solchen Ventilkörpers einer der konischen Abschnitte 26, 27 als Betätigungselement oder dieser Ventilkörper ist noch in Verlängerung der konischen Spitzen 28, 29 mit stangenförmigen Stücken 10 wenigstens an der Seite ausgestattet, an welcher ein Austritt aus der Einsaugöffnung wegen der Konizität nicht möglich ist.

Ein solcher Ventilkörper ist, wie oben zur Vereinfachung der Handhabung dargelegt, in verschiedener Richtung in dafür vorgesehene verschiedene Gefäße mit verschiedenen Konizitäten an der Einsaugöffnung einsetzbar, wobei die konischen Abschnitte 26, 27 als Ventilkörper ihre Anlage an entsprechend konisch ausgestalteten Gegenflächen des Probengefäßes finden.

**Patentansprüche**

1. Befüllbares Probenaufnahmegefäß zur Handhabung einer flüssigen Probe, mit einer Öffnung (4) größeren Querschnitts entsprechend einem größeren Gefäßdurchmesser an einem Ende und einer sich zum anderen Ende verjüngenden konischen Form mit einer Einsaug-oder Abgabeöffnung (6) (im folgenden als Einsaugöffnung bezeichnet), wobei an der Einsaugöffnung (6) ein beweglicher Ventilkörper als Schwerkraftventil (7) vorgesehen ist, durch den die Einsaugöffnung (6) verschließbar ist und der mit einem durch die Einsaugöffnung herausgeführten, mit Untermaß in bezug zu der Einsaugöffnung ausgeführten Betätigungselement versehen ist und der von der größeren Öffnung her im Bereich der Einsaugöffnung einen diese abschließenden Ventilsitz findet, dadurch gekennzeichnet, daß der Ventilkörper (24) beiderseits eines mittleren zylindrischen Abschnittes (25) Ventilschäfte (26, 27) hat, daß die Ventilschäfte konisch sind, daß die Abdichtung über den Konus jeweils eines der beiden Ventilschäfte (26, 27) erfolgt, und daß der der Einsaugöffnung (6) zugewandte Ventilschaft (27) das Betätigungselement bildet oder aufweist.

2. Probenaufnahmegefäß nach Anspruch 1, dadurch gekennzeichnet, daß die konischen Ventilschäfte (26, 27) in kegelförmigen Spitzen (28, 29) enden, von denen eine das Betätigungselement bildet.

3. Probenaufnahmegefäß nach Anspruch 1 oder 2,dadurch gekennzeichnet, daß zumindest ein Ventilschaft (27) ein stangenförmiges Betätigungselement (10) aufweist.

4. Probenaufnahmegefäß nach einem der Ansprüche 1 bis 3, dadurch gekennzeichnet, daß der Ventilsitz eine sich nach oben öffnende konische Gestalt aufweist, in welcher ein entsprechender konischer Ventilschaft (27) des Ventilkörpers einsetzbar ist.

5. Probenaufnahmegefäß nach Anspruch 4, dadurch gekennzeichnet, daß ein konischer Ventilsitz von der Innenwand (9) eines sich verjüngenden Wandteils des Probenaufnahmegefäßes gebildet ist.

6. Probenaufnahmegefäß nach einem der Ansprüche 1 bis 5, gekennzeichnet durch einen von oben frei beweglich eingesetzten und mehrfach verwendbaren Ventilkörper (24).

7. Probenaufnahmegefäß nach einem der Ansprüche 1 bis 6, dadurch gekennzeichnet, daß die Ventilschäfte (24, 26) verschiedene Konuswinkel haben.

**Claims**

1. A fillabe sample taking vessel for handling a liquid sample, comprising an opening (4) of larger cross-sectional area corresponding to a larger vessel diameter at one end and a conical shape tapering towards the other end including an intake or discharge opening (6) (referred to as intake opening), wherein a movable valve body as a gravity valve (7) is provided at the intake opening (6) through which valve body the intake opening (6) may be sealed and which valve member is provided with an actuating element extending outwardly through the intake opening and being bare relative to the intake opening and which valve member cooperates with a valve seat to be engaged from the side of the larger opening in the region of the intake opening, characterized in that the valve member 24 comprises valve stems (26, 27) at either side of an intermediate cylindrical portion (25), that the valve stems are conical, that the sealing is accomplished via the cone each of one of both valve stems (26, 27) and that the valve stem (27) facing the intake opening (6) defines or, respectively, includes the actuating element.

2. The sample taking vessel of claim 1 characterized in that the conical valve stems (26, 27) terminate in conical tips (28, 29) of which one defines the actuating element.

3. The sample taking vessel of claim 1 or 2, characterized in that at least a valve stem (27) includes a rod-shaped actuating element (10).

4. The sample taking vessel of one of claims 1 to 3, characterized in that the valve seat is conically shaped opening towards the top and that a corresponding conical valve stem (27) of the valve member may be inserted therein.

5. The sample taking vessel of claim 4, characterized in that a conical valve seat is defined by the inner wall (9) of a tapering wall portion of the sample taking vessel.

6. The sample taking vessel of one of claims 1 to 5, characterized by a valve member (24) which is freely movable inserted from above and which may be used a multiple times.

7. The sample taking vessel of one of claims 1 to 6, characterized in that the conical stems (24, 26) have different cone angles.

**Revendications**

1. Dispositif remplissable de réception d'échantillons destiné à la manipulation d'un échantillon de liquide, présentant une ouverture (4) de plus grande section, correspondant à un diamètre plus important du dispositif, à une extrémité, et une forme conique se rétrécissant vers l'autre extrémité, laquelle comporte une ouverture d'aspiration ou de décharge (6) (désignée par la suite par ouverture d'aspiration), dispositif dans lequel est prévu, à l'ouverture d'aspiration (6), un corps de soupape mobile formant une soupape à gravité (7) par laquelle l'ouverture d'aspiration (6) peut être obturée, cette soupape étant pourvue d'un élément de commande qui fait saillie par l'ouverture d'aspiration et est de moindres dimensions que celle-ci, ladite soupape rencontrant, en partant de l'ouverture de plus grande dimension un siège de soupape, situé au voisinage de l'ouverture d'aspiration, pour obturer celle-ci,
caractérisé en ce que le corps de soupape (24) porte, des deux côtés d'une section médiane cylindrique (25), des tiges de soupape (26, 27), en ce que ces tiges de soupape (26, 27) sont coniques, en ce que l'étanchéité est assurée par le cône formé par l'une ou l'autre des deux tiges de soupape (26, 27), et en ce que la tige de soupape (27) tournée vers l'ouverture d'aspiration (6) forme ou présente l'élément de commande.

2. Dispositif de réception d'échantillons selon la revendication 1, caractérisé en ce que les tiges de soupape coniques (26, 27) se terminent par des pointes de forme conique (28, 29), dont l'une forme l'élément de commande.

3. Dispositif de réception d'échantillons selon la revendication 1 ou 2, caractérisé en ce qu'au moins une tige de soupape (27) présente un élément de commande en forme de tige (10).

4. Dispositif de réception d'échantillons selon l'une des revendications 1 à 3, caractérisé en ce que le siège de soupape présente une forme conique s'ouvrant vers le haut, dans laquelle une tige de soupape conique correspondante (27) du corps de soupape peut être introduite.

5. Dispositif de réception d'échantillons selon la revendication 4, caractérisé en ce qu'un siège de soupape conique est formé par la paroi interne (9) d'une partie de la paroi qui se rétrécit du dispositif de réception d'échantillons.

6. Dispositif de réception d'échantillons selon l'une des revendications 1 à 5, caractérisé par un corps de soupape (24) librement inséré par le haut et plusieurs fois réutilisable.

7. Dispositif de réception d'échantillons selon l'une des revendications 1 à 6, caractérisé en ce que les tiges de soupapes (24, 26) ont des angles de cône différents.

# Fig.1

Fig. 2